# EUROPÄISCHE PATENTSCHRIFT

(11) **EP 2 375 893 B1**
(45) Veröffentlichungstag und Bekanntmachung des Hinweises auf die Patenterteilung: **20.02.2013**
(21) Anmeldenummer: 09775156.4
(22) Anmeldetag: 08.12.2009
(51) Int. Cl.: A01N 25/04, A01N 37/38, A01N 47/14

(54) **PFLANZENSCHUTZFORMULIERUNGEN, ENTHALTEND DIMETHOMORPH UND DITHIOCARBAMAT**
PLANT PROTECTION FORMULATIONS COMPRISING DIMETHOMORPH AND DITHIOCARBAMATE
PRÉPARATIONS DE PROTECTION DES PLANTES CONTENANT DU DIMÉTHOMORPHE ET DU DITHIOCARBAMATE

(30) Priorität: 09.12.2008 EP 08171121
(43) Veröffentlichungstag der Anmeldung: 19.10.2011
(73) Patentinhaber: BASF SE, 67056 Ludwigshafen (DE)
(72) Erfinder: KNIERIEM, Torsten, 68305 Mannheim (DE); OTTILLINGER, Thomas, 67105 Schifferstadt (DE)
(86) Internationale Anmeldenummer: PCT/EP2009/066644
(87) Internationale Veröffentlichungsnummer: WO 2010/066744

(56) Entgegenhaltungen:
- WO-A1-00/72681
- WO-A1-97/41727

## Beschreibung

Die vorliegende Erfindung betrifft fungizide Pflanzenschutzformulierungen, enthaltend:
a) Dimethomorph als Wirkstoff A und
b) wenigstens einen Wirkstoff B aus der Gruppe der Dithiocarbamate.

Fungizide Wirkstoffe werden im Allgemeinen nicht in ihrer reinen Form sondern in Form einer Formulierung eingesetzt. In Abhängigkeit von dem Anwendungsgebiet und der Anwendungsart, sowie in Abhängigkeit von physikalischen, chemischen und biologischen Parametern werden die Wirkstoffe in Mischung mit üblichen Träger-, Hilfs- und Zusatzstoffen als Wirkstoffformulierung eingesetzt. Auch die Kombinationen mit weiteren Wirkstoffen zur Erweiterung des Wirkungsspektrums und/oder zum Schutz der Kulturpflanzen sind bekannt. Formulierungen von agrochemischen Wirkstoffen sollten im Allgemeinen eine hohe chemische und physikalische Stabilität, eine gute Applizierbarkeit und Anwenderfreundlichkeit und eine breite biologische Wirkung mit hoher Selektivität aufweisen.

Dimethomorph [IUPAC: 4-[3-(4-Chlorphenyl)-3-(3,4-dimethoxyphenyl)acryloyl]-morpholin] ist ein systemischer fungizider Wirkstoff und kommerziell erhältlich (siehe z.B. "The Pesticide Manual" 14. Auflage (2006), The British Crop Protection Council, Seiten 347 f.).

Dithiocarbamate wie Mancozeb, Maneb, Zineb, Propineb und Metiram sind Kontaktfungizide und ebenfalls kommerziell erhältlich (siehe z.B. "The Pesticide Manual" 14. Auflage (2006), The British Crop Protection Council, Seiten 646-649 für Mancozeb und Seiten 714 f. für Metiram).

Die WO 88/05630 beschreibt Wirkstoffzusammensetzungen von 3,3-Bis(phenyl)-acrylsäuremorpholiden wie Dimethomorph mit weiteren Pflanzenschutzwirkstoffen, beispielsweise Mancozeb. Als mögliche Formulierungen werden emulgierbare Konzentrate und wasserdispergierbare Pulver vorgeschlagen.

Aufgrund der bekannten chemischen Instabilität von Dithiocarbamaten bei erhöhter Temperatur in Gegenwart von Feuchtigkeit werden Dithiocarbamat-Wirkstoffe in der Regel als Festformulierungen wie dispergierbare Pulver und Granulate formuliert. Vereinzelt sind auch wässrige Suspensionskonzentrate von Mancozeb erhältlich.

Eine Formulierung von Dimethomorph mit dem fungiziden Dithiocarbamat Mancozeb ist in Form eines in Wasser dispergierbaren Granulats unter der Bezeichnung Acrobat® Plus WG kommerziell erhältlich.

Nachteile der Festformulierungen sind die Bildung von Staub oder Abrieb, die bei der Anwendung zu einer Gefährdung des Anwenders führen können. Ein weiteres Problem ist die Instabilität der im Stand der Technik beschriebenen Formulierungen gegenüber Feuchtigkeit. So führt die Anwesenheit von Feuchtigkeit, insbesondere bei höheren Temperaturen, auch in festen Formulierungen zu einer partiellen Zersetzung der Dithiocarbamate. Die damit einhergehende Freisetzung von Ethylenthioharnstoff ist aus arbeitshygienischen Gründen problematisch. Außerdem lassen sich feste Formulierungen nach Lagerung bei erhöhter Temperatur häufig nur schlecht in Wasser resuspendieren, was ihre Handhabung bei der Applikation erschwert. Die aus dem Stand der bekannten Formulierungen von Dimethomorph und Dithiocarbamaten sind zudem bezüglich ihrer biologischen Aktivität nicht immer zufriedenstellend.

Der vorliegenden Erfindung liegt daher die Aufgabe zugrunde, eine Formulierung von Dimethomorph mit Dithiocarbamaten, insbesondere Mancozeb, bereitzustellen, welche die Nachteile des Standes der Technik überwindet.

Es wurde überraschenderweise gefunden, dass diese Aufgabe dadurch gelöst werden kann, dass man Dimethomorph und den wenigstens einen Wirkstoff aus der Gruppe der Dithiocarbamate als Ölsuspensionskonzentrat in einem flüssigen organischen Verdünnungsmittel C, welches unter Kohlenwasserstoffen, Fettsäureestem und Pflanzenölen und deren Gemischen ausgewählt ist, formuliert.

Gegenstand der vorliegenden Erfindung ist daher eine fungizide Pflanzenschutzformulierung, enthaltend als Wirkstoffe:
a) Dimethomorph als Wirkstoff A und
b) wenigstens einen Wirkstoff B aus der Gruppe der Dithiocarbamate,
wobei die Pflanzenschutzformulierung als ein Ölsuspensionskonzentrat der Wirkstoffe A und B in einem flüssigen organischen Verdünnungsmittel C formuliert ist, welches unter Kohlenwasserstoffen, Pflanzenölen, Fettsäureestem und deren Gemischen ausgewählt ist, und wobei die Pflanzenschutzformulierung weiterhin wenigstens eine oberflächenaktive Substanz D enthält.

Die Erfindung ist mit einer Reihe von Vorteilen verbunden. Die erfindungsgemäßen Formulierungen sind auch bei höheren Temperaturen und/oder längeren Lagerungszeiträumen stabil, d.h. eine Bildung von Ethylen(thio)harnstoff wird ebenso wenig beobachtet wie die Bildung von Sedimenten beim Verdünnen mit Wasser, was bei konventionellen Granulaten, insbesondere nach längerer Lagerung häufig der Fall ist.

Die erfindungsgemäßen fungiziden Formulierungen weisen eine ausgezeichnete fungizide Wirksamkeit gegen ein breites Spektrum wirtschaftlich bedeutender Schadpilze, insbesondere Oomyceten auf. Außerdem zeichnen sich die erfindungsgemäßen Formulierungen durch einen raschen Wirkungseintritt und eine lange anhaltende fungizide Wirkung aus. Die nachteilige Auswirkung von Regen auf die fungizide Wirkung ist zudem sehr viel geringer als bei konventionellen Formulierungen dieser Wirkstoffe. Des Weiteren wird durch die Formulierungen die kurative Wirkung des Dimethomorph erhöht.

In den erfindungsgemäßen Formulierungen liegen die Wirkstoffe überwiegend als feinteilige Partikel vor, die in dem organischen Verdünnungsmittel suspendiert sind. Daher werden die erfindungsgemäßen Wirkstoffformulierungen auch als Ölsuspensionskonzentrate bezeichnet. Die erfindungsgemäßen Ölsuspensionskonzentrate können auch einen geringen Anteil des Wirkstoffs A und geringe Anteile des Wirkstoffs B in gelöster Form enthalten. Der Anteil des gelösten Wirkstoffs A wird in der Regel 20 Gew.-%, insbesondere 10 Gew.-%, bezogen auf die Gesamtmenge des in der Formulierung enthaltenen Wirkstoffs A nicht überschreiten. Der Anteil des gelösten Wirkstoffs B wird in der Regel 10 Gew.-%, insbesondere 5 Gew.-%, bezogen auf die Gesamtmenge des in der Formulierung enthaltenen Wirkstoffs B nicht überschreiten. Die Partikelgröße der suspendierten Teilchen liegt in dem für Ölsuspensionskonzentrate typischen Bereich. In der Regel weisen die Partikel einen mittleren Teilchendurchmesser im Bereich von 0,5 bis 20 µm, insbesondere im Bereich von 0,8 bis 10 µm auf. Bei den hier angegebenen Teilchengrößen handelt es sich, sofern nichts anderes angegeben wird, um D₅₀-Werte, d.h. um gewichtsmittlere Teilchendurchmesser, wie man sie durch Lichtstreuung bestimmen kann. Vorzugsweise weisen wenigstens 80 Gew.-%, insbesondere wenigstens 90 Gew.-% der Teilchen Teilchengrößen in den angegebenen Bereichen auf. Insbesondere weisen wenigstens 90 Gew.-% der Teilchen einen Teilchendurchmesser von nicht mehr als 20 µm, insbesondere nicht mehr als 10 µm auf. Insbesondere weisen wenigstens 50 Gew.-%, insbesondere 80 Gew.-% der Teilchen einen Teilchendurchmesser von höchstens 8 µm oder gar 5 µm auf.

Als Komponente A enthalten die erfindungsgemäßen Formulierungen den Pflanzenschutzwirkstoff Dimethomorph. Die Menge an Dimethomorph liegt typischerweise im Bereich von 1 bis 30 Gew.-%, insbesondere im Bereich von 1,5 bis 20 Gew.-% und speziell im Bereich von 2 bis 10 Gew.-%, bezogen auf das Gesamtgewicht der Formulierung.

Als Komponente B enthalten die erfindungsgemäßen Formulierungen wenigstens ein fungizid wirksames Dithiocarbamat. Beispiele für fungizid wirksame Dithiocarbamate sind Maneb, Zineb, Mancozeb, Propineb und Metiram und deren Mischungen, wobei Mancozeb und Metiram sowie deren Gemische bevorzugt sind. Besonders bevorzugtes Fungizid ist Mancozeb. Die Menge an Dithiocarbamat liegt typischerweise im Bereich von 10 bis 50 Gew.-%, insbesondere im Bereich von 15 bis 45 Gew.-% und speziell im Bereich von 20 bis 40 Gew.-%, bezogen auf das Gesamtgewicht der Formulierung.

Das Mengenverhältnis der Wirkstoffe A:B liegt typischerweise im Bereich von 1:50 bis 1:1, insbesondere im Bereich von 1:20 bis 1:2 und speziell im Bereich von 1:10 bis 1:3.

Neben den vorgenannten Wirkstoffen können die erfindungsgemäßen Formulierungen auch weitere agrochemische Wirkstoffe, insbesondere Fungizide enthalten. Ihr Anteil wird in der Regel 50 Gew.-%, insbesondere 30 Gew.-% und speziell 10 Gew.-%, bezogen auf das Gesamtgewicht der Formulierung nicht überschreiten. Sofern vorhanden beträgt die Menge an weiterem agrochemischen Wirkstoff 0,1 bis 50 Gew.-%, insbesondere 0,5 bis 30 Gew.-% oder 1 bis 20 Gew.-%. In einer bevorzugten Ausführungsform enthält die Formulierung keinen weiteren Wirkstoff oder nicht mehr als 5 Gew.-%, bezogen auf das Gewicht der Formulierung, bzw. nicht mehr als 10 Gew.-%, bezogen auf die Gesamtmengen an Wirkstoff A und B, einen oder mehrere weitere Wirkstoffe.

Die Gesamtmenge an Wirkstoff A, B und gegebenenfalls weiterem Wirkstoff wird in der Regel 60 Gew.-%, insbesondere 50 Gew.-%, bezogen auf das Gesamtgewicht der erfindungsgemäßen Formulierung nicht überschreiten und liegt typischerweise im Bereich von 11 bis 60 Gew.-%, insbesondere im Bereich von 17 bis 55 Gew.-% und speziell im Bereich von 22 bis 50 Gew.-%, bezogen auf das Gesamtgewicht der erfindungsgemäßen Formulierung.

Bevorzugte weitere Wirkstoffe sind insbesondere fungizide Wirkstoffe den Gruppen
- Strobilurine, wie beispielsweise Azoxystrobin, Dimoxystrobin, Enestroburin, Fluoxastrobin, Kresoxim-Methyl, Metominostrobin, Picoxystrobin, Pyraclostrobin, Trifloxystrobin, Orysastrobin, Methyl (2-chlor-5-[1-(3-methylbenzyloxyimino)ethyl]-benzyl)carbamat, Methyl (2-chlor-5-[1-(6-methylpyridin-2-ylmethoxyimino)ethyl]-benzyl)carbamat, Methyl 2-(ortho-(2,5-dimethylphenyloxymethylen)phenyl)-3-methoxyacrylat;
- Sulfonamide, wie beispielsweise Cyazofamid und Amisulbrom,
- Phthalimide, wie beispielsweise Captan, Captafol, Folpet und Thiochlorfenphim sowie
- Chinonfungizide, wie beispielsweise Chloranil, Benquinox, Dithianon und Dichlone.

Als Komponente C enthalten die erfindungsgemäßen Formulierungen wenigstens ein flüssiges organisches Verdünnungsmittel, welches unter Kohlenwasserstoffen und Pflanzenölen, Fettsäureestem, insbesondere Fettsäurealkylestern, und deren Gemischen ausgewählt ist (bezüglich Kohlenwasserstoffe siehe z.B. Römpp Lexikon Chemie, 10. Auflage, Band 3, Seite 2202 (1997), Georg Thieme Verlag Stuttgart / New York). Hierunter sind solche Verdünnungsmittel und Verdünnungsmittelgemische bevorzugt, die bei Normalbedingungen (T = 273,15 K, p = 101,325 kPa) flüssig sind.

Flüssig bedeutet, dass das Verdünnungsmittel bei Standardbedingungen (Standarddruck p = 101,325 kPa) eine dynamische Viskosität bei 20°C (293,15 K) von in der Regel nicht mehr als 1 Pa.s, vorzugsweise nicht mehr als 500 mPa.s, beispielsweise nicht mehr als 150 mPa.s, insbesondere nicht mehr als 100 mPa.s, speziell nicht mehr als 50 mPa.s aufweist, insbesondere im Bereich von 1 bis 150 mPa.s, vorzugsweise im Bereich von 2 bis 100 mPa.s und insbesondere im Bereich von 3 bis 50 mPa.s liegt (bestimmt nach ASTM D 445).

Die Kohlenwasserstoffe können acyclische (aliphatische) Kohlenwasserstoffe sein, oder cyclische Kohlenwasserstoffe, z.B. aromatische oder alicyclische (cycloaliphatische) Kohlenwasserstoffe. Die Kohlenwasserstoffe sind typischerweise flüssig und weisen eine dynamische Viskosität bei 20°C von in der Regel nicht mehr 150 mPa.s, insbesondere nicht mehr als 100 mPa.s, speziell nicht mehr als 50 mPa.s auf. Sie liegt insbesondere im Bereich von 1 bis 150 mPa.s, vorzugsweise im Bereich von 1,2 bis 100 mPa.s und insbesondere im Bereich von 1,5 bis 50 mPa.s liegt (bestimmt nach ASTM D 445).

Beispiele für Kohlenwasserstoffe sind:
1) aromatische Kohlenwasserstoffe, z.B. ein- oder mehrfach alkyl-substituierte (z.B. ein-, zwei- oder dreifach C₁-C₁₀-Alkyl-substituierte) Aromate, z.B. Benzole wie Toluol, Xylole, Mesitylen, Ethylbenzol, Kohlenwasserstoffe mit kondensierten aromatischen Ringsystemen wie Naphthaline, z.B. 1 -Methylnaphthalin, 2-Methylnaphthalin oder Dimethylnaphtalin, oder andere kondensierte aromatische Kohlenwasserstoffe wie Indan oder Tetralin,
2) cycloaliphatische Kohlenwasserstoffe, z.B. gesättigte oder ungesättigte, gegebenenfalls ein- oder mehrfach alkyl-substituierte (z.B. ein-, zwei- oder dreifach C₁-C₁₀-Alkyl-substituierte) Cycloaliphate wie Cycloalkane, Cycloalkene oder Cycloalkine, z.B. Cyclohexan oder Methylcyclopentan,
3) aliphatische Kohlenwasserstoffe, z.B. lineare oder verzweigte, gesättigte oder ungesättigte Aliphate, bevorzugt C₅-C₁₆-Aliphaten, z.B. Alkane, Alkene oder Alkine, wie Pentan, Hexan, Octan, 2- Methylbutan oder 2,2,4-Trimethylpentan.

Als Kohlenwasserstoffe können auch Gemische eines oder mehrerer aromatischer Kohlenwasserstoffe und/oder eines oder mehrerer cycloaliphatischer Kohlenwasserstoffe und/oder eines oder mehrerer aliphatischer Kohlenwasserstoffe enthalten sein. Beispiele sind Gemische mehrerer aliphatischer Kohlenwasserstoffe, z.B. kommerziell erhältliche Verdünnungsmittel der ExxsoL^{®}D-Reihe, ISOPAR^{®}-Reihe, insbesondere Isopar® H, Isopar® K oder BAYOL^{®}-Reihe z.B. Bayol^{®}85 (EXXONMOBIL CHEMICALS), der ISANE^{®}IP-Reihe oder der HYDROSEAL^{®}G-Reihe (TOTAL FINA ELF), oder Gemische von aromatischen und aliphatischen Kohlenwasserstoffen, z.B. kommerziell erhältliche Verdünnungsmittel der SOLVESSO^{®}-Reihe z.B. Solvesso^{®}100, Solves-so^{®}150 oder Solvesso^{®}200 (EXXONMOBIL CHEMICALS), der SOLVA-REX^{®}/SOLVARO^{®}-Reihe (TOTAL FINA ELF) oder der Caromax^{®}-Reihe z.B. Caromax^{®}28 (Petrochem Carless).

Von den Kohlenwasserstoffen sind aliphatische bevorzugt, insbesondere gesättigte aliphatische Kohlenwasserstoffe wie C₅-C₁₆-Alkane, z.B. aus der ExxsoL^{®}D-Reihe, der ISOPAR^{®}-Reihe, der BAYOL^{®}-Reihe, der ISANE^{®}IP-Reihe, der MARCOL^{®} Reihe oder der HYDROSEAL^{®}G-Reihe (TOTAL FINA ELF).

Geeignete Pflanzenöle sind allgemein bekannt und kommerziell erhältlich. Unter dem Begriff Pflanzenöle im Sinne der vorliegenden Erfindung werden z.B. Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Maiskeimöl verstanden.

Bevorzugte Pflanzenöle sind flüssige Triglyceride von C₁₀-C₂₂-Fettsäuren, insbesondere Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, die raffiniert oder nicht raffiniert sein können, und speziell Maiskeimöl.

Unter den Fettsäureestem sind neben den vorgenannten als Pflanzenöle genannten natürlichen (nativen) Triglyceriden von C₁₀-C₂₂-Fettsäuren insbesondere auch synthetische Di- und Triester von Glycerin oder Glykol mit den C₁₀-C₂₂-Fettsäuren sowie insbesondere C₁-C₄-Alkylester, speziell Methyl- oder Ethylester von C₁₀-C₂₂-Fettsäuren geeignet. Unter den Fettsäureestern sind insbesondere C₁-C₄-Alkyl-C₁₀-C₂₂-fettsäureester, insbesondere Methyl- oder Ethylester von C₁₀-C₂₂-Fettsäuren geeignet, wie sie z.B. durch Umesterung der vorgenannten Glycerin- oder Glykol-C₁₀-C₂₂-fettsäureester mit C₁-C₄-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart. Die Fettsäureester sind in der Regel flüssig und weisen in der Regel eine dynamische Viskosität bei 20°C von nicht mehr 150 mPa.s, insbesondere nicht mehr als 100 mPa.s, speziell nicht mehr als 50 mPa.s auf. Ihre Viskosität liegt insbesondere im Bereich von 1 bis 150 mPa.s, vorzugsweise im Bereich von 1,2 bis 100 mPa.s und insbesondere im Bereich von 1,5 bis 50 mPa.s liegt (bestimmt nach ASTM D 445).

Bevorzugte Verdünnungsmittel sind Kohlenwasserstoffe, insbesondere aliphatische Kohlenwasserstoffe und Gemische von Kohlenwasserstoffen, insbesondere aliphatischen Kohlenwasserstoffen, sowie Gemische von Kohlenwasserstoffen, insbesondere aliphatischen Kohlenwasserstoffen mit Pflanzenölen oder Fettsäureestem, insbesondere C₁-C₄-Alkyl-C₁₀-C₂₂-fettsäureestern.

In einer bevorzugten Ausführungsform der Erfindung liegt der Aromatenanteil in dem Verdünnungsmittel unterhalb 1 %, bezogen auf die Gesamtmenge an Verdünnungsmittel.

Die Gesamtmenge an Verdünnungsmittel in der Formulierung liegt typischerweise im Bereich von 20 bis 80 Gew.-%, insbesondere im Bereich von 30 bis 70 Gew.-% und speziell im Bereich von 35 bis 60 Gew.%, bezogen auf das Gesamtgewicht der Formulierung.

In einer bevorzugten Ausführungsform handelt es sich bei dem organischen Verdünnungsmittel C um ein Gemisch, umfassend:
C.1 wenigstens ein erstes organisches Verdünnungsmittel, das unter aliphatischen Kohlenwasserstoffen und aliphatischen Kohlenwasserstoffgemischen mit einer Viskosität von 10 bis 150 mPa.s, insbesondere 12 bis 120 mPa.s und speziell 12 bis 60 mPa.s bei 20°C, Pflanzenölen und Fettsäureestem ausgewählt ist, und
C.2 wenigstens ein zweites organisches Verdünnungsmittel, das unter Kohlenwasserstoffen, insbesondere aliphatischen Kohlenwasserstoffen, und deren Gemischen mit einer Viskosität von weniger als 10 mPa.s, z.B. 1 bis < 10 mPa.s, insbesondere 1,5 bis 5 mPa.s bei 20°C ausgewählt ist.

Bevorzugte Verdünnungsmittel C.1 sind paraffinische Kohlenwasserstoffe wie Paraffinöle mit einer Viskosität von 10 bis 150 mPa.s, insbesondere 12 bis 120 mPa.s und speziell 12 bis 60 mPa.s bei 20°C, wie sie beispielsweise unter den Bezeichnungen ExxsoL^{®}D, BAYOL^{®}, ISANE^{®}IP, MARCOL^{®} oder HYDROSEAL^{®}G kommerziell erhältlich sind.

Bevorzugte Verdünnungsmittel C.2 sind isoparaffinische Kohlenwasserstoffe wie Paraffinöle mit einer Viskosität von weniger als 10 mPa.s, typischerweise 0,4 bis weniger als 10 mPa.s, z.B. 1 bis < 10 mPa.s, mehr bevorzugt 1 bis 5 mPa.s, insbesondere 1,5 bis 5 mPa.s bei 20°C, wie sie beispielsweise unter den Bezeichnungen Isopar® H, K, L und M kommerziell erhältlich sind.

Sofern ein Gemisch aus dem Verdünnungsmittel C.1 und C.2 eingesetzt wird, liegt das Gewichtsverhältnis von C.1 zu C.2 typischerweise im Bereich von 1:2 bis 20:1, insbesondere im Bereich von 1:1 bis 10:1. Die Menge an Verdünnungsmittel C.1 liegt typischerweise im Bereich von 15 bis 75 Gew.-%, insbesondere im Bereich von 20 bis 60 Gew.-% und speziell im Bereich von 25 bis 50 Gew.%, bezogen auf das Gesamtgewicht der Formulierung. Die Menge an Verdünnungsmittel C.2 in der Formulierung liegt typischerweise im Bereich von 1 bis 50 Gew.-%, insbesondere im Bereich von 4 bis 40 Gew.-% und speziell im Bereich von 5 bis 25 Gew.%, bezogen auf das Gesamtgewicht der Formulierung.

Die erfindungsgemäße Pflanzenschutzformulierung enthält weiterhin wenigstens eine oberflächenaktive Substanz D. Die oberflächenaktive Substanz wird im Folgenden auch als Tensid bezeichnet. Als oberflächenaktive Substanzen kommen grundsätzlich alle für die Herstellung von Pflanzenschutzmitteln üblichen oberflächenaktiven Substanzen (Tenside) in Betracht. Hierzu zählen sowohl Tenside auf nichtaromatischer Basis, z.B. auf Olefin-, Aliphaten-, Heterocyclen- oder Cycloaliphatenbasis, beispielsweise oberflächenaktive Alkanole oder Alkenole oder Derivate von Alkanolen oder Alkenolen, z.B. alkoxylierte, sulfatierte, sulfonierte oder phosphatierte Alkanole oder Alkenole, mit einer oder mehreren Alkylgruppen substituierte und nachfolgend derivatisierte, z.B. alkoxylierte, sulfatierte, sulfonierte oder phosphatierte Heterocyclenverbindungen, z.B. Pyridin-, Pyrimidin-, Triazin-, Pyrol-, Pyrolidin-, Furan-, Thiophen-, Benzoxazol-, Benzthiazol- und Triazolverbindungen, sowie Tenside auf aromatischer Basis, z.B. mit einer oder mehreren Alkylgruppen substituierte und nachfolgend derivatisierte, z.B. alkoxylierte, sulfatierte, sulfonierte oder phosphatierte Benzole oder Phenole.

Geeignete oberflächenaktive Substanzen D sind im allgemeinen in der Verdünnungsmittelphase löslich und geeignet, diese - zusammen mit darin suspendierten Wirkstoffen - bei Verdünnung mit Wasser (zur Spritzbrühe) zu emulgieren beziehungsweise dispergieren.

Beispiele für oberflächenaktive Substanzen D sind nachfolgend aufgeführt. Hier und im Folgenden steht EO für eine von Ethylenoxid, PO für eine von Propylenoxid und BO für eine von Butylenoxid abgeleitete Wiederholungseinheit. Beispiele für oberflächenaktive Substanzen aus der Gruppe der Tenside auf nichtaromatischer Basis sind die Tenside der im Folgenden genannten Gruppen d1) bis d23), vorzugsweise der Gruppen d1), d2), d3), d4), d12) und d17) sowie deren Mischungen.
d1) aliphatische C₈-C₂₄-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Die terminalen Hydroxygruppen dieser Verbindungen können durch einen Alkyl-, Cycloalkyl- oder Acylrest mit 1-24, insbesondere 1 bis 4 Kohlenstoffatomen endgruppenverschlossen sein. Beispiele für derartige Verbindungen sind: Genapol^{®}C-,L-,O-,T-,UD-,UDD-,X-Produkte der Clariant, Plurafac^{®}- und Lutensol^{®}A-, AT-, ON-, TO-Produkte der BASF SE, Marlipal^{®}24- und 013 Produkte von Condea, Dehypon^{®}-Produkte von Henkel, Berol^{®}-Produkte und Ethylan^{®}-Produkte von Akzo-Nobel wie Berol^{®}50 und Ethylan^{®} CD 120;
d2) Anionische Derivate der unter d1) beschriebenen Produkte in Form von Ethercarboxylaten, -sulfonaten, -sulfaten und -phosphaten und deren anorganische (z.B. Alkali und Erdalkali) und organische Salzen (z.B. auf Amin- oder Alkanolaminbasis) wie Genapol^{®}LRO, Sandopan^{®}-Produkte, Hostaphat/Hordaphos^{®}-Produkte von Clariant;
d3) Copolymere bestehend aus EO, PO und/oder BO Einheiten, insbesondere EO/PO-Blockcopolymere wie die PluroniC^{®}-Produkte von der BASF SE und die Synperonic^{®}-Produkte von Uniquema mit einem Molekulargewicht von 400 bis 10⁶ Dalton sowie Alkylenoxydaddukte von C₁-C₉ Alkoholen wie Atlox^{®}5000 von Uniquema oder Hoe^{®}-S3510 von Clariant;
d4) Fettsäure- und Triglyceridalkoxylate wie die Serdox^{®}NOG-Produkte von Condea sowie alkoxylierte Pflanzenöle wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, beispielsweise die Emulsogen^{®}-Produkte von Clariant;
d5) Salze von aliphatischen, cycloaliphatischen oder olefinischen Carbonsäuren und Polycarbonsäuren, sowie Alpha-Sulfofettsäureester wie von Henkel erhältlich;
d6) Fettsäureamidalkoxylate wie die Comperlan^{®}-Produkte von Henkel oder die Amam^{®}-Produkte von Rhodia;
d7) Alkylenoxydaddukte von Alkindiolen wie die Surfynol^{®}-Produkte von Air Products. Zuckerderivate wie Amino- und Amidozucker von Clariant.Glukitole von Clariant, Alkylpolyglycoside in Form der APG^{®}-Produkte von Henkel oder wie Sorbitanester in Form der Span^{®}- oder Tween^{®}-Produkte von Uniquema oder Cyclodextrinester oder -ether von Wacker;
d8) Oberflächenaktive Cellulose- und Algin-, Pektin- und Guarderivate wie die Tylose^{®}-Produkte von Clariant, die Manutex^{®}-Produkte von Kelco und Guarderivate von Cesalpina;
d9) Alkylenoxydaddukte auf Polyolbasis wie Polyglykol^{®}-Produkte von Clariant;
d10) Grenzflächenaktive Polyglyceride und deren Derivate von Clariant;
d11) Alkylpolyglykoside und deren alkoxylierte Derivate;
d12) Sulfosuccinate, Alkansulfonate, Paraffin- und Olefinsulfonate wie Netzer IS^{®}, Hoe^{®}S1728, Hostapur^{®}OS, Hostapur^{®}SAS von Clariant;
d13) Alkylenoxidaddukte von Fettaminen;
d14) quartäre Ammonium-Verbindungen mit 8 bis 22 Kohlenstoffatomen (C₈-C₂₂) wie z.B. die Genamin^{®}C,L,O,T-Produkte von Clariant;
d15) Oberflächenaktive, zwitterionische Verbindungen wie Tauride, Betaine und Sulfobetaine in Form von Tegotain^{®}-Produkte von Goldschmidt, Hostapon^{®}T- und Arkopon^{®}T-Produkte von Clariant;
d16) Oberflächenaktive Verbindungen auf Silikon- bzw Silanbasis wie die Tegopren^{®}-Produkte von Goldschmidt und die SE^{®}-Produkte von Wacker, sowie die Bevaloid^{®}-, Rhodorsil^{®}- und Silcolapse^{®}-Produkte von Rhodia (Dow Coming, Reliance, GE, Bayer);
d17) Per- oder polyfluorierte oberflächenaktive Verbindungen wie Fluowet^{®}-Produkte von Clariant, die Bayowet^{®}-Produkte von Bayer, die Zonyl^{®}-Produkte von DuPont und Produkte dieser Art von Daikin und Asahi Glass;
d18) Grenzflächenaktive Sulfonamide z.B. von Bayer;
d19) Grenzflächenaktive Carboxylat-Gruppen aufweisende Polymere, z.B. Polyacryl- und Polymethacrylpolymere, die gegebenenfalls Polyethylenoxid-Seitenketten aufweisen wie die Sokalan^{®}-Produkte von der BASF, und Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere mit Polyethylenglykolen wie die Agrimer^{®}-VEMA-Produkte von ISP, oberflächenaktive Polyamide wie modifizierte Gelatine oder derivatisierte Polyasparginsäure von Bayer und deren Derivate;
d21) Neutrale tensidische Polyvinylverbindungen wie modifiziertes Polyvinylpyrollidon wie die Luviskol^{®}-Produkte von BASF und die Agrimer^{®}-Produkte von ISP oder die derivatisierten Polyvinylacetate wie die Mowilith®-Produkte von Clariant oder die -butyrate wie die Lutonal^{®}-Produkte von der BASF, die Vinnapas^{®}- und die Pioloform^{®}-Produkte von Wacker oder modifizierten Polyvinylalkohole wie die Mowiol^{®}-Produkte von Clariant, und oberflächenaktive Derivate von Montan-, Polyethylen- und Polypropylenwachsen wie die Hoechst^{®}-Wachse oder die Licowet^{®}-Produkte von Clariant;
d22) Poly- oder perhalogenierte Phosphonate und Phosphinate wie Fluowet®-PL von Clariant;
d23) Poly- oder perhalogenierte neutrale Tenside wie beispielsweise Emulsogen^{®}-1557 von Clariant.

Beispiele für oberflächenaktive Substanzen aus der Gruppe der Tenside auf Aromatenbasis sind die Tenside der im Folgenden genannten Gruppen d24) bis d28), vorzugsweise der Gruppen d24), d26), d27) und d28).
d24) (Poly)alkoxylierte, insbesondere polyethoxylierte aromatische Verbindungen wie (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 2 bis 4 C-Atome aufweist, vorzugsweise mit 3 bis 10 mol Alkylenoxid umgesetztes Phenol, (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol, Polyarylphenole oder Polyarylphenolalkoxylate [= Polyarylphenol- (poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol und deren Kondensationsprodukte mit Formaldehyd - hierunter bevorzugt sind mit 4 bis 10 mol Ethylenoxid umgesetztes Alkylphenol, kommerziell beispielsweise in Form der Agrisol^{®}-Produkte (Akcros) erhältlich, mit 4 bis 50 mol Ethylenoxid umgesetztes Triisobutylphenol, kommerziell beispielsweise in Form der Sapogenat® T-Produkte (Clariant) erhältlich, mit 4 bis 50 mol Ethylenoxid umgesetztes Nonylphenol, kommerziell beispielsweise in Form der Arkopal^{®}-Produkte (Clariant) erhältlich, mit 4 bis 150 mol Ethylenoxid umgesetztes Tristyrylphenol, beispielsweise aus der Soprophor^{®}-Reihe wie Soprophor^{®} FL, Soprophor^{®} 3D33, Soprophor^{®} BSU, Soprophor^{®} 4D-384, Soprophor^{®} CY/8 (Rhodia);
d25) Verbindungen, die formal die Umsetzungsprodukte der unter d24) beschriebenen Moleküle mit Schwefelsäure oder Phosphorsäure darstellen und deren mit geeigneten Basen neutralisierte Salze, beispielsweise der saure Phosphorsäureester eines mit 2 bis 10 Mol Ethylenoxid ethoxylierten C₁-C₁₆-Alkylphenols, z.B. der saure Phosphorsäureester eines mit 3 mol oder mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol;
d26) Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öllösliche Salze wie beispielsweise die Erdalkalimetallsalze, z. B. das Calciumsalz der Dodecylbenzolsulfonsäure, das Isopropylammoniumsalz der Dodecylbenzolsulfonsäure und saures (lineares) Dodecylbenzolsulfonat, kommerziell beispielsweise in Form der Marlon^{®}-Produkte (Hüls);
d27) Ligninsulfonate, z. B. die Alkalimetall- oder Erdalkalimetallligninsulfonate wie Natrium- oder Calciumligninsulfonat, oder Ammoniumligninsulfonat wie Ufoxane^{®} 3A, Borresperse AM^{®} 320 oder Borresperse^{®} NA;
d28) Kondensationsprodukte von Arylsulfonsäuren wie Phenolsulfonsäure oder Naphthalinsulfonsäure mit Formaldehyd und gegebenenfalls Harnstoff, insbesondere deren Salze und speziell die Alkalimetallsalze und die Erdalkalimetallsalze wie Calcium-Salze, z.B. die Tamol^{®}- und Wettol^{®}-Marken der BASF SE wie Wettol^{®} D1.

Bei den Alkylenoxyeinheiten sind Ethylenoxy-, Propylenoxy- und Butylenoxyeinheiten, insbesondere Ethylenoxyeinheiten und Gemische aus Ethylenoxy- und Propylenoxyeinheiten bevorzugt.

Bevorzugte nichtionische oberflächenaktive Substanzen D.2 sind die unter d1) genannten Substanzen, insbesondere alkoxylierte C₈-C₂₄-Alkanole, die in der Gruppe d4) genannten Produkte, insbesondere alkoxylierte Pflanzenöle, die in der Gruppe d24) genannten Produkte, insbesondere ethoxylierte Alkylphenole und ethoxylierte Tristyrylphenole.

Gemäß einer besonders bevorzugten Ausführungsform der Erfindung umfassen die nichtionischen oberflächenaktiven Substanzen, wenigstens einen alkoxylierten aliphatischen C₈-C₂₄-Alkohol, vorzugsweise wenigstens ein alkoxyliertes aliphatisches C₈-C₂₄-Alkanol, insbesondere wenigstens ein ethoxyliertes und/oder propoxyliertes C₁₀-C₂₀-Alkanol, speziell wenigstens ein ethoxyliertes und/oder propoxyliertes C₁₂-C₁₆-Alkanol, insbesondere wenigstens ein alkoxyliertes C₈-C₂₄-Alkanol der Formel I

Alk-O-(A-O)ₘ-R (I)

wobei
- Alk: für einen linearen oder verzweigten Alkylrest mit 8 bis 24, insbesondere 10 bis 20 C-Atomen oder linearen oder verzweigten Alkenylrest mit 8 bis 24, insbesondere 10 bis 20 C-Atomen steht,
- A: in der Gruppe (A-O)ₘ gleich oder verschieden sein kann und für Ethandiyl, Propandiyl oder Butandiyl, insbesondere für 1,2-Ethandiyl oder eine Kombination aus Ethandiyl und Propan-1,2-diyl steht,
- m: für 2 bis 50, insbesondere 3 bis 30 steht, besonders bevorzugt 4 bis 20 steht, und
- R: Wasserstoff oder C₁-C₁₀-Alkyl, insbesondere Wasserstoff oder besonders bevorzugt C₁-C₆-Alkyl, speziell Wasserstoff, Methyl oder Ethyl bedeutet.

Gemäß einer anderen besonders bevorzugten Ausführungsform der Erfindung umfassen die nichtionischen oberflächenaktiven Substanzen, wenigstens ein alkoxyliertes Tristyrylphenol, insbesondere wenigstens ein ethoxyliertes und/oder propoxyliertes Tristyrylphenol, speziell wenigstens ein ethoxyliertes Tristyrylphenol, insbesondere wenigstens ein alkoxyliertes Tristyrylphenol der Formel I'

TST-O-(A-O)ₘ-R (I')

wobei
- TST: für einen Tristyrylrest steht,
- A: in der Gruppe (A-O)ₘ gleich oder verschieden sein kann und für Ethandiyl, Propandiyl oder Butandiyl, insbesondere für 1,2-Ethandiyl oder eine Kombination aus Ethandiyl und Propan-1,2-diyl steht,
- m: für 2 bis 50, insbesondere 3 bis 30 steht, besonders bevorzugt 4 bis 20 steht, und
- R: Wasserstoff oder C₁-C₁₀-Alkyl, insbesondere Wasserstoff oder besonders bevorzugt C₁-C₆-Alkyl, speziell Wasserstoff, Methyl oder Ethyl bedeutet.

Bevorzugte anionische oberflächenaktive Substanzen D.1 sind die unter der Gruppe d26) genannten Alkylbenzolsulfonate mit vorzugsweise 8 bis 22 C-Atomen, insbesondere deren Alkalimetallsalze und Calcium-Salze, die als Gruppe d27) genannten Ligninsulfonate, insbesondere deren Alkalimetallsalze und Calcium-Salze, sowie die in der Gruppe d28) genannten Kondensationsprodukte, insbesondere deren Ammoniumsalze (NH₄⁺), Alkalimetallsalze und Calcium-Salze.

Die Gesamtmenge an oberflächenaktiven Substanzen D in der Formulierung liegt typischerweise im Bereich von 1 bis 50 Gew.-%, insbesondere im Bereich von 2 bis 30 Gew.-% und speziell im Bereich von 5 bis 25 Gew.%, bezogen auf das Gesamtgewicht der Formulierung.

Gemäß einer bevorzugten Ausführungsform enthalten die erfindungsgemäßen Formulierungen wenigstens eine anionische oberflächenaktive Substanz D.1, insbesondere wenigstens eine anionische oberflächenaktive Substanz, die ausgewählt ist unter den in den Gruppen d26), d27) und d28) genannten Substanzen, insbesondere deren Ammoniumsalze (NH₄⁺), Alkalimetallsalze und Calcium-Salze. Gemäß einer speziellen Ausführungsform der Erfindung umfasst die anionische oberflächenaktive Substanz wenigstens ein Ligninsulfonat, insbesondere in Form des Alkalimetallsalzes. Gemäß einer anderen speziellen Ausführungsform der Erfindung umfasst die anionische oberflächenaktive Substanz wenigstens ein Alkylbenzolsulfonat, insbesondere in Form des Alkalimetallsalzes oder Erdalkalimetallsalzes, z.B. Calciumdodecylbenzolsulfonat.

Die Gesamtmenge an anionischen oberflächenaktiven Substanzen D.1 in der Formulierung liegt typischerweise im Bereich von 0,5 bis 20 Gew.-%, insbesondere im Bereich von 1 bis 15 Gew.-% und speziell im Bereich von 2 bis 10 Gew.%, bezogen auf das Gesamtgewicht der Formulierung.

Gemäß einer besonders bevorzugten Ausführungsform enthalten die erfindungsgemäßen Formulierungen neben der wenigstens einen anionischen oberflächenaktiven Substanz D.1 zusätzlich wenigstens eine nichtionische oberflächenaktive Substanz D.2. Bevorzugte weitere nichtionische oberflächenaktive Substanzen sind die unter d1) genannten Substanzen, insbesondere alkoxylierte C₈-C₂₄-Alkanole, die in der Gruppe d4) genannten Produkte, insbesondere alkoxylierte Pflanzenöle, die in der Gruppe d24) genannten Produkte, insbesondere ethoxylierte Phenole. Gemäß einer besonders bevorzugten Ausführungsform der Erfindung umfasst die wenigstens eine weitere nichtionische oberflächenaktive Substanz wenigstens ein alkoxyliertes aliphatisches C₈-C₂₄-Alkanol, insbesondere wenigstens ein ethoxyliertes und/oder propoxyliertes C₁₀-C₂₀-Alkanol, speziell wenigstens ein ethoxyliertes und/oder propoxyliertes C₁₂-C₁₆-Alkanol, insbesondere wenigstens ein alkoxyliertes C₈-C₂₄-Alkanoi der Formel I wie zuvor definiert, insbesondere eine Substanz der Formel I, worin Alk, A, R und m die zuvor als bevorzugt oder besonders bevorzugt angegebenen Bedeutungen haben. Gemäß einer anderen besonders bevorzugten Ausführungsform der Erfindung umfasst die wenigstens eine weitere nichtionische oberflächenaktive Substanz wenigstens ein alkoxyliertes Tristyrylphenol, insbesondere wenigstens ein ethoxyliertes und/oder propoxyliertes Tristyrylphenol, insbesondere wenigstens ein alkoxyliertes Tristyrylphenol der Formel I' wie zuvor definiert, insbesondere eine Substanz der Formel I', worin TST, A, R und m die zuvor als bevorzugt oder besonders bevorzugt angegebenen Bedeutungen haben.

Gemäß einer anderen bevorzugten Ausführungsform enthalten die erfindungsgemäßen Formulierungen als oberflächenaktive Substanzen ein Gemisch wenigstens zwei, insbesondere 2 oder 3 voneinander verschiedene, nichtionische oberflächenaktiven Substanzen D.2. In diesem Fall umfassen die wenigstens zwei von einander verschiedenen oberflächenaktiven Substanzen D.2 wenigstens eine erste nichtionische oberflächenaktive Substanz D.2.1 mit einem niedrigen HLB-Wert und wenigstens eine oberflächenaktive Substanz D.2.2 mit einem höheren HLB-Wert. Der Begriff "HLB-Wert" (abgeleitet vom englischen "hydrophilic-lipophilic balance") ist ein Maß für den Grad der Hydrophilie oder Lipophilie einer oberflächenaktiven Substanz. Hier und im Folgenden wird unter dem HLB-Wert der HLB-Wert nach Griffin (W. C. Griffin, J. Soc. Cosmet. Chem 1, (1950) S. 311; ebenda 5 (1954), S. 249) verstanden. Im Falle nichtionischer oberflächenaktiver Substanzen, insbesondere im Falle von nichtionischen Ethoxilaten ergibt sich der HLB-Wert gemäß der folgenden Formel

HLB = 20 * (M_{H}/M) + C

worin M_{H} die Molmasse des hydrophilen Molekülteils (Oligoethylenoxid-Gruppe) und M die Molmasse der oberflächenaktiven Substanz bedeuten und C für einen Korrekturfaktor steht, der bei aliphatischen Alkylethoxilaten -1,2 und bei aromatischen Alkylethoxilaten -1,9 (eine Alkylgruppe) oder -4,4 (zwei Alkylgruppen) beträgt. Der HLB-Wert für nichtionische oberflächenaktive Substanzen und der Korrekturfaktor C sind bekannt (siehe z.B. H. Mollet et al, Formulation Technology, Wiley VCH, Weinheim 2001, S. 70-78) Der HLB-Wert kann außerdem über dem Fachmann geläufige Formeln oder experimentell ermittelt werden (siehe H. Mollet, loc.cit).

Der HLB-Wert der nichtionischen oberflächenaktiven Substanz D.2.1 wird in der Regel nicht mehr als 12, insbesondere nicht mehr als 11 und speziell nicht mehr als 10 betragen und z.B. im Bereich von 4 bis 12, häufig im Bereich von 5 bis 11 und speziell im Bereich von 6 bis 10 liegen. Der HLB-Wert der nichtionischen oberflächenaktiven Substanz D.2.2 wird in der Regel mehr als 12, insbesondere wenigstens 13 und speziell wenigstens 14 betragen und z.B. im Bereich von 12,5 bis 18, häufig im Bereich von 13 bis 17,5 und speziell im Bereich von 13,5 bis 17 liegen.

Die nichtionische oberflächenaktive Substanz D.2.1 mit einem HLB-Wert von höchstens 12 kann aus allen zuvor genannten nicht-ionischen oberflächenaktiven Substanzen ausgewählt werden, die einen HLB-Wert von höchsten 12, insbesondere von 4 bis 12 oder von 5 bis 11 oder 6 bis 10 haben. Geeignete oberflächenaktive Substanzen D.2.1 umfassen insbesondere C₂-C₃-alkoxylierte C₈-C₂₂₋Alkylphenole, Monofettsäureester des Sorbitans, C₂-C₃-alkoxylierte Mono-, Di- oder Tristyrylphenylether und Verbindungen der Formel I, worin m im Bereich von 2 bis 12 liegt, jedes A jeweils unabhängig für 1,2-Ethandiyl oder Propan-1,2-diyl steht, Alk für lineares oder verzweigtes C₈-C₂₄-Alkyl oder C₈-C₂₄-Alkenyl steht, und R für H oder C₁-C₁₀-Alkyl steht.

Besonders bevorzugt sind nicht-ionische oberflächenaktive Substanzen D.2.1 der Formel I, die ausgewählt sind unter Ethoxylaten und Ethoxylat-co-propoxylaten von linearen oder verzweigten C₈-C₂₂-Alkanolen. Beispiele solcher bevorzugten oberflächenaktiven Substanzen sind Ethoxylate von linearen oder verzweigten C₈₋₂₂-Alkoholen, die kommerziell unter den Handelsnamen Berol^{®} 50, Berol^{®} 532, Berol^{®} 533, Berol^{®} 535, Berol^{®} OX 91-4 (Akzo); Lutensol^{®} TO3, Lutensol^{®} TO5 und Lutensol^{®} TO7 (BASF SE) erhältlich sind sowie Ethoxylat-co-propoxylate von Fettalkoholen, die kommerziell unter den Handelsnamen Plurafac® LF 221, Plurafac® LF 300, Plurafac® LF 401 und Plurafac® LF 1200 (BASF) erhältlich sind.

Die nicht-ionische oberflächenaktive Substanz D.2.2 mit einem HLB-Wert von über 12 kann aus allen zuvor genannten nicht-ionischen oberflächenaktiven Substanzen ausgewählt werden, die einen HLB-Wert von über 12, insbesondere von 12,5 bis 18, oder von 13 bis 17,5 oder von 13,5 bis 17 haben. Geeignete oberflächenaktive Substanzen D.2.2 umfassen insbesondere ethoxylierte C₈-C₂₂-Alkylphenole mit einem Ethoxilierungsgrad im Bereich von 10 bis 50, Verbindungen der Formel I, worin m im Bereich von 8 bis 50, insbesondere 10 bis 40 liegt, jedes A jeweils unabhängig für 1,2-Ethandiyl steht, Alk für lineares oder verzweigtes C₈-C₂₄-Alkyl oder C₈-C₂₄-Alkenyl steht und R für Wasserstoff steht, sowie ethoxilierte Tristyrylphenole, insbesondere solche der Formel I', worin m für eine Zahl im Bereich von 10 bis 50, insbesondere 12 bis 40 steht, R für Wasserstoff steht und A für 1,2-Ethandiyl steht.

Beispiele solcher bevorzugten oberflächenaktiven Substanzen sind Ethoxylate von Tristyrylphenol, die kommerziell erhältlich sind unter den Handelsnamen Soprophor^{®} (Rhodia), insbesondere Soprophor^{®} BSU, Soprophor^{®} S 25 und Soprophor^{®} S 40, und Ethoxylate von verzweigten C₁₀-C₂₂-Alkoholen, die kommerziell erhältlich sind unter den Handelsnamen Lutensol^{®}(BASF), insbesondere Lutensol^{®} TO10, Lutensol^{®} TO15

Die vorgenannten oberflächenaktiven Substanzen sind dem Fachmann bekannt und kommerziell erhältlich. Eine Übersicht findet sich beispielsweise in McCutcheon's "Detergents and Emulsifiers Annual", MC Publ. Corp., Ridgewood N.J.; Sisley and Wood, "Encyclopedia of Surface active Agents", Chem. Publ.Co.Inc, N.Y. 1964; Schönfeldt, "Grenzflächenaktive Äthylenoxidaddukte", Wiss. Verlagsgesellschaft, Stuttgart 1976; Winnacker-Küchier, "Chemische Technologie", Band 7, C. Hauser-Verlag, München, 4.Auflage 1986.

Die Gesamtmenge an nichtionischen oberflächenaktiven Substanzen in der Formulierung liegt, sofern vorhanden, typischerweise im Bereich von 0,5 bis 30 Gew.-%, insbesondere im Bereich von 1 bis 20 Gew.-% und speziell im Bereich von 5 bis 15 Gew.%, bezogen auf das Gesamtgewicht der Formulierung. Das Gewichtsverhältnis von anionischer oberflächenaktiver Substanz zu nichtionischer oberflächenaktiver Substanz liegt in derartigen Formulierungen typischerweise im Bereich von 10:1 bis 1:10, insbesondere im Bereich von 5:1 bis 1:5.

Die erfindungsgemäßen Zusammensetzungen können als weitere Komponente E eine oder mehrere die rheologischen Eigenschaften der Formulierung modifizierende Substanzen, im Allgemeinen auch als Verdicker bezeichnet, enthalten. Hierzu zählen alle Substanzen, die bekanntermaßen bereits in geringer Einsatzmenge die rheologischen Eigenschaften, sprich die Viskosität der Formulierung erhöhen. Hierzu zählen insbesondere alle die Viskosität von Ölen erhöhenden Substanzen, speziell solche, die für Pflanzenschutzformulierungen geeignet sind.

Beispiele für als Komponente E geeignete Substanzen sind:
e1) natürliche Silikate und modifizierte natürliche Silikate, wie chemisch modifizierte Bentonite, Hectorite, Attapulgite, Montmorillonite, Smektite oder andere Silikatmineralien, wie Bentone® (Elementis), Attagel® (Engelhard), Agsorb® (Oil-Dri Corporation) oder Hectorite® (Akzo Nobel), bevorzugt Bentone®,
e2) synthetische Silikate bzw. Kieselsäuren, insbesondere hochdisperse Silikate und Kieselsäuren der Sipernat®-, Aerosil®- oder Durosil®-Reihe (Degussa), der CAB-O-S I L®-Reihe (Cabot) oder der Van Gel-Reihe (RT. Vanderbilt),
e3) organische Verdicker, beispielsweise auf Basis von hydrierten Fettsäuren und Fettsäurederivaten wie die Verdicker der Thixin®- oder Thixatrol®-Reihe (Elementis) sowie Verdicker auf Basis synthetischer Polymere, z.B. Polyalkyl(meth)acrylate, Polyamid-Verdicker, Polyurethanverdicker, Xanthan-Gum, z.B. die unter Rhodopol® (Rhodia) und Kelzan® S (Kelco Corp.) vertriebenen Produkte.

Bevorzugte Verdicker sind solche auf Basis natürlicher oder synthetischer Silikate und Kieselsäuren, z.B. die in den Gruppen e1) und e2) genannten Substanzen.

Die Gesamtmenge an Substanzen der Komponente E in der Formulierung liegt, sofern vorhanden, typischerweise im Bereich von 0,1 bis 10 Gew.-%, insbesondere im Bereich von 0,2 bis 8 Gew.-% und speziell im Bereich von 0,3 bis 5 Gew.%, bezogen auf das Gesamtgewicht der Formulierung.

Neben den vorgenannten Komponenten A bis E können die erfindungsgemäßen Formulierungen auch weitere übliche Zusatzstoffe F enthalten, wie sie in Pflanzenschutzformulierungen üblicherweise eingesetzt werden. Hierzu zählen Anti-Drift-, Haft-, Penetrations-, Konservierungs- und Frostschutzmittel, Antioxidantien, Farbstoffe, Riechstoffe und Entschäumer. Der Anteil derartiger Hilfsstoffe wird typischerweise 10 Gew.-% der Formulierung nicht überschreiten.

Geeignete Frostschutzmittel sind solche aus der Gruppe der Harnstoffe, Diole und Polyole, wie Ethylenglycol und Propylenglycol. Geeignete Entschäumer sind solche auf Basis von Siliconen. Geeignete Konservierungsmittel, Färb- und Duftstoffe sind dem Fachmann bekannt, beispielsweise aus der zuvor im Zusammenhang mit oberflächenaktiven Substanzen genannten Literatur sowie aus Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963.

Die erfindungsgemäßen Ölsuspensionskonzentrate können durch an sich bekannte Verfahren zur Herstellung von Ölsuspensionskonzentraten hergestellt, z.B. durch Vermischen der Komponenten A bis E und gegebenenfalls F hergestellt werden. So kann z.B. die Komponente C vorgelegt und die weiteren Komponenten A, B, D, E, gegebenenfalls Restmengen von C und gegebenenfalls F zugegeben werden. Vor Zugabe der übrigen Komponenten kann die Komponente C gegebenenfalls auch mit einem Verdicker vermischt werden. Die erhaltene Ölsuspension kann anschließend, gegebenenfalls nach einer Vorvermahlung, einer Feinvermahlung unterzogen werden.

Zur Herstellung der Mischungen können gängige Mischapparate verwendet werden, die gegebenenfalls temperiert werden. Zur Vorvermahlung können z.B. Hochdruckhomogenisatoren oder nach dem Rotor-Stator Prinzip arbeitende Mühlen verwendet werden, wie Ultraturax-Homogenisatoren, z.B. der Fa. IKA, oder Zahnkolloidmühlen, z.B. der Fa. Puck. Für die Feinvermahlung können z.B. diskontinuierliche Perimühlen, z.B. der Fa. Drais oder kontinuierliche Perimühlen, der z.B. Fa. Bachofen verwendet werden. Je nach den Eigenschaften der eingesetzten Komponenten, sowie Verfahrens- und sicherheitstechnischen Anforderungen und aus wirtschaftlichen Gründen, kann das Herstellverfahren angepasst und gegebenenfalls auf eine Vorvermahlung oder auch auf eine Feinvermahlung verzichtet werden.

Die zur Herstellung eingesetzten Komponenten A bis E und gegebenenfalls F können Wasser als Nebenbestandteil enthalten, welches sich in den erfindungsgemäßen Ölsuspensionskonzentraten wiederfindet. Die erfindungsgemäßen Ölsuspensionskonzentrate können daher geringe Mengen von Wasser enthalten, im allgemeinen nicht mehr als 5 Gew.-%, insbesondere nicht mehr als 1 Gew.-%, bezogen auf das Gesamtgewicht der Formulierung.

Die erfindungsgemäßen Formulierungen weisen bei ihrer Anwendung eine ausgezeichnete fungizide Wirksamkeit gegen ein breites Spektrum wirtschaftlich bedeutender Schadpilze, insbesondere Oomyceten auf. Ein weiterer Gegenstand der Erfindung ist daher die Verwendung der erfindungsgemäßen Formulierungen zur Bekämpfung von Schadpilzen, insbesondere auf Kulturpflanzen.

Die genannten Eigenschaften und Vorteile sind in der praktischen Pilzbekämpfung von Nutzen, um landwirtschaftliche Kulturen, speziell Weinreben sowie Obstsorten und Gemüsesorten wie z.B. Kartoffel, Tomate, Zwiebelgemüse wie Porree, Frühlingszwiebeln und Speisezwiebeln, Salate, Bohnen, Rettich, Radieschen und Gurke, Gemüsejungpflanzen und Zierpflanzen vor Pilzbefall, insbesondere von einem Befall mit Peronospora-, Puccinia-, Plasmopara- und/oder Phytophtora-Arten freizuhalten und befallene Pflanzen zu behandeln, um eine Verringerung der Pilzinfektion zu erreichen und/oder eine Zunahme der Pilzinfektion zu verhindern. Auf diese Weise lassen sich die Erträge qualitativ und quantitativ sichern und/oder erhöhen. Die erfindungsgemäßen Formulierungen sind sowohl zur Anwendung im Freiland als auch im Gewächshaus geeignet. Der technische Standard wird durch diese neuen Mittel hinsichtlich der beschriebenen Eigenschaften deutlich übertroffen.

Die vorliegende Erfindung betrifft auch ein Verfahren zur Bekämpfung von Schadpilzen, insbesondere in Pflanzenkulturen, umfassend die Applikation einer erfindungsgemäßen Pflanzenschutzformulierung, vorzugsweise in Form einer wässrigen Verdünndung.

Zur Anwendung werden die erfindungsgemäßen Formulierungen gegebenenfalls in üblicher Weise verdünnt, z.B. mittels Wasser, wobei man wässrige Emulsionen oder Suspoemulsionen erhält. Es kann vorteilhaft sein, den erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche flüssigen fungiziden Mittel, erhältlich durch Verdünnen der erfindungsgemäßen Formulierungen.

Die nachfolgenden Beispiele sollen die Erfindung erläutern, ohne limitierenden Charakter zu haben.
- Anionische oberflächenaktive Substanz AOS1 (Gruppe d27)): NatriumLigninsulfonat (Ufoxane^{®}3A).
- Anionische oberflächenaktive Substanz AOS2 (Gruppe d28)): Calciumdodecylsulfonat (Wettol^{®}EM1).
- Anionische oberflächenaktive Substanz AOS3 (Gruppe d12)): Dioctylsulfosuccinat-Natriumsalz.
- Nichtionische oberflächenaktive Substanz NOS1 (Gruppe d1)): Isotridecylalkohol mit 6 Ethylenoxid(EO)-Einheiten, Methyl-endverschlossen (Genapol^{®} X060 Methylether, Clariant).
- Nichtionische oberflächenaktive Substanz NOS2 (Gruppe d1)): C₁₂₋₁₆ Alkohol mit 3 EO-Einheiten, HLB-Wert 8,0.
- Nichtionische oberflächenaktive Substanz NOS3 (Gruppe d1)): C₁₃ Alkohol mit 7 EO-Einheiten, HLB-Wert 11-12.
- Nichtionische oberflächenaktive Substanz NOS4 (Gruppe d1)): C₁₀ Alkohol mit 7 EO-Einheiten, HLB-Wert 13.
- Nichtionische oberflächenaktive Substanz NOS5 (Gruppe d24)): Tristyrylphenololigoethoxylat mit 16 EO-Einheiten, (Soprophor^{®} BSU, Rhodia).
- Nichtionische oberflächenaktive Substanz NOS6 (Gruppe d1)): C₁₃ Alkohol mit 10 EO-Einheiten, HLB-Wert 13,5.
- Nichtionische oberflächenaktive Substanz NOS7 (Gruppe d1)): Fettalkoholalkoxylat (PLURAFAC^{®} LF 221 der BASF SE).
- Nichtionische oberflächenaktive Substanz NOS8 (Gruppe d1)): C₁₃ Alkohol mit 15 EO-Einheiten, HLB-Wert 15,5.
- Entschäumer: Silikonöl (Rhodorsil^{®}416, Clariant).
- Verdünnungsmittel 1: Isoparaffinischer Kohlenwasserstoff mit einer Viskosität < 2 mPa.s bei 25°C (Isopar® H, Exxon).
- Verdünnungsmittel 2: Paraffinöl mit einer Viskosität von 27-37 mPa.s bei 20°C, (Bayol^{®}85, Exxon).
- Verdünnungsmittel 3: Rapsöl.
- Verdünnungsmittel 4: Methyloleat.

### Beispiel 1:

In einer Vorlage wurden 37,3 g Verdünnungsmittel 1 vorgelegt und 5,1 g Dimethomorph zugesetzt. Nach Mischen mit einem Ultra-Turax^{®} wurde die Suspension mit Hilfe einer Dynomill^{®} Mühle mit einer Drehzahl von ca. 3000 min⁻¹ und einer Austrittstemperatur von 25 - 30°C gemahlen. Anschließend wurden 8,5 g der nichtionischen oberflächenaktiven Substanz 1 sowie 8,5 g Verdünnungsmittel 2 mit einem Ultra-Turrax^{®}eingearbeitet. Parallel wurde ein Mancozeb Premix bestehend aus 85 Gew.-% Mancozeb und 15 Gew.-% Ufoxane^{®} 3A hergestellt und anteilig (40,2 g) in die Ölsuspension eingerührt. Danach erfolgte unter Rühren die Zugabe des Rhodorsil^{®} 416. Nach der Vermahlung wurde das Ölsuspensionskonzentrat 20 Minuten nachgerührt und dann abgefüllt.

Die Formulierung hatte folgende Zusammensetzung: 5,1 % Dimethomorph b) 34,2% Mancozeb c) 37,3 Gew.-% Verdünnungsmittel 1, c) 8,5 Gew.-% Verdünnungsmittel 2 d) 6 Gew.-% AOS1, d) 8,5 Gew.-% NOS1, f) 0,4 Gew.-% Rhodorsil 416.

### Beispiel 2:

Das Ölsuspensionskonzentrat wurde analog dem Beispiel 1 hergestellt, jedoch wurden 37,3 g Maiskeimöl anstelle von Verdünnungsmittel 1 eingesetzt.

### Beispiele 3 bis 9:

Die Herstellung der Ölsuspensionskonzentrate der Beispiele 3 bis 9 erfolgte in Analogie zu Beispiel 1. Die Inhaltsstoffe der Formulierungen sind in der folgenden Tabelle 1 angegeben.

**Tabelle 1:**

| | Bsp.3 | Bsp.4 | Bsp.5 | Bsp.6 | Bsp.7 | Bsp.8 | Bsp.9 |
|---|---|---|---|---|---|---|---|
| Dimethomorph [g/l] | 60 | 45 | 60 | 60 | 60 | 60 | 60 |
| Mancozeb [g/l] | 400 | 300 | 400 | 400 | 400 | 400 | 400 |
| AOS2 | - | - | - | - | 50 | - | 50 |
| AOS3 | - | - | - | - | - | 10 | - |
| NOS2 | 50 | 50 | 50 | 25 | - | - | - |
| NOS3 | - | - | - | 50 | - | - | - |
| NOS4 | 100 | 100 | 100 | 50 | - | - | - |
| NOS5 | 10 | 10 | 10 | - | - | - | - |
| NOS6 | - | - | - | - | 50 | - | - |
| NOS7 | - | - | - | - | - | 100 | - |
| NOS8 | - | - | - | - | - | - | 50 |
| Verdünnungsmittel 1 [g/l] | 250 | - | 350 | 150 | 100 | 150 | 100 |
| Verdünnungsmittel 2 | - | - | - | ad 1 l | - | ad 1 l | - |
| Verdünnungsmittel 3 | ad 1 l | ad 1 l | ad 1 l | - | - | - | - |
| Verdünnungsmittel 4 | - | - | - | - | ad 1 l | - | ad 1 l |

### Applikationstest: Randwinkelmessung:

Das erfindungsgemäße Ölsuspensionskonzentrat aus Beispiel 1 wurde mit Wasser einer definierten Wasserhärte (CIPAC Standard-Wasser D (342 ppm)) auf die Anwendungskonzentration (3 g Ölsuspensionskonzentrat in 97 g Wasser) verdünnt und anschließend ein Tropfen auf Paraffinfilm aufgebracht. Parallel dazu wurde mit dem wasserdispergierbaren Granulat ebenfalls eine Suspension (2 g Granulat (9 % Dimethomorph + 60% Mancozeb + 3 % Natriumalkylsulfonat: Acorbat® Plus der BASF SE) in 98 g CIPAC Standard-Wasser D) hergestellt und anschließend ein Tropfen auf Paraffinfilm aufgebracht. Der Randwinkel der beiden Tropfen wurde mittels Mikroskop bestimmt und miteinander verglichen. Der Randwinkel der Suspension basierend auf dem wasserdispergierbaren Granulat ist mit dem Randwinkel von reinem Wasser vergleichbar (= über 90°). Der Randwinkel der verdünnten Ölsuspension lag bei nur 35° und zeigt somit eine deutlich bessere Benetzung.

### Bestimmung der chemischen Stabilität:

Die chemische Stabilität der Ölsuspensionskonzentrat aus den Beispielen 1 und 2 wurde bestimmt, indem einzelne Proben bei 40°C über 4 bzw. 8 Wochen sowie in einem weiteren Versuch über 4 Wochen bei 40°C und anschließend 4 Wochen bei 50 °C gelagert wurden. Die Lagerproben wurden zu Beginn der Studie und nach Lagerung auf den ETU-Gehalt (ETU = Ethylenthioharnstoff (toxisches Abbauprodukt von Dithiocarbamaten) bestimmt mittels HPLC, Eluent Wasser mit 0,05 % Tetrahydrofuran) hin untersucht. Nach 4- bzw. 8-wöchiger Lagerung wurde der ETU-Gehalt erneut gemessen. Dabei zeigte sich nach der Lagerung bei keiner der genannten Lagertemperaturen ein Anstieg des ETU-Gehaltes. Der ETU-Gehalt lag in allen Fällen unterhalb 0,05 Gew.-%.

### Biologische Versuche:

Biologische Versuche wurden an Tomaten sowie Weinreben unter Protektiv- und Kurativbedingungen durchgeführt. Dabei zeigte sich, dass Dimethomorph speziell unter diesen Bedingungen tendenziell besser in Kombination mit einem Öl wirkt.

So wurde bei Freiland-Untersuchungen zum Befall der Blätter von Wein der Sorte Patricia mit dem Erreger *Plasmopara viticola* bei Verwendung des handelsüblichen wasserverdünnbaren Granulats bei einer Gesamtaufwandmenge von 1380 g/ha (180 g/ha Dimethomorph und 1200 g/ha Mancozeb) 5 Tage nach der letzten Applikation (insgesamt 4 Applikationen im Abstand von je 7 Tagen, 350-400 l/ha Wasser) ein Befall von 18 % beobachtet. Unter Verwendung des Ölsuspensionskonzentrats aus Beispiel 1 bei gleicher Gesamtaufwandmenge und zum gleichen Zeitpunkt lag der Befall bei 13 %.

Das Ölsuspensionskonzentrat des Beispiels 1 wurde bezüglich seiner Aktivität gegen die Krautfäule an Kartoffeln, verursacht durch *Phytophthora infestans* unter künstlicher Inokulation im Feld untersucht.

Die Versuche wurden an zwei Standorten in Rheinland-Pfalz unter Feldbedingungen mit ausreichender Wasser- und Nährstoffversorgung durchgeführt. In beiden Versuchen wurde die Kartoffelsorte "Bintje" verwendet. Die Formulierungen wurden in den angegebenen Konzentrationen an 3 Terminen im Abstand von 17 Tagen und 9 Tagen appliziert. 2 Tage vor der ersten Behandlung erfolgte eine künstliche Infektion mit dem Erreger. Zum Zeitpunkt der Applikationen befanden sich die Pflanzen im Wachstumsstadium 33 bis 69. Die Untersuchung zeigte, dass die mit dem Ölsuspensionskonzentrat des Beispiels 1 behandelten Pflanzen bei einer Gesamtaufwandmenge von 1040 g/ha und 1380 g/ha 7 Tage nach der dritten Behandlung einen Befall von 4 % aufwiesen, wohingegen zum gleichen Zeitpunkt und bei gleicher Aufwandmenge der Befall bei Behandlung mit dem wasserverdünnbaren Granulat bei 10 % lag.

Die Formulierungen der Beispiele 3 bis 9 wurden bezüglich ihrer Aktivität gegen die Krautfäule an Tomaten, verursacht durch *Phytophthora infestans,* bei protektiver und kurativer Behandlung untersucht.

Blätter von getopften Tomatenpflanzen wurden mit einer wässrigen Verdünnung der Beispielformulierung bei angegebener Wirkstoffkonzentration bis zur Tropfnässe besprüht. Für die protektive Behandlung wurden die Blätter 7 Tage nach der Behandlung mit einer wässrigen Sporangienaufschwemmung von *Phytophthora infestans* inokuliert. Für die kurative Behandlung wurden die Pflanzen bereits einen Tag vor der Wirkstoffapplikation inokuliert. Anschließend wurden die Pflanzen in einer wasserdampfgesättigten Kammer bei Temperaturen zwischen 18 und 20°C aufgestellt. Nach 5 Tagen hatte sich die Krautfäule auf den unbehandelten, jedoch infizierten Kontrollpflanzen so stark entwickelt, dass der Befall visuell in % ermittelt werden konnte. Die Ergebnisse sind in Tabellen 2a und 2b zusammengestellt:

**Tabelle 2a**

| Beispiel | Wirkstoffkonzentration [ppm] | Befall [%] kurativ | Befall [%] protektiv |
|---|---|---|---|
| unbehandelt | 0 | 70 | 83,3 |
| 3 | 345 (300+45) | 0 | 0 |
| 3 | 172,5 (150+22,5) | 0 | 0 |
| unbehandelt | 0 | 73,3 | 80 |
| 4 | 345 | 0 | 0,3 |
| 4 | 172,5 | 0 | 0,3 |
| 5 | 345 | 0 | 0 |
| 5 | 172,5 | 1,7 | 0,3 |

**Tabelle 2b (protektive Behandlung)**

| Beispiel | Wirkstoffkonzentration [ppm] | Befall [%] |
|---|---|---|
| unbehandelt | 0 | 73,3 |
| 3 | 86,25 (75+11,25) | 3,0 |
| 4 | 86,25 (75+11,25) | 3,0 |
| 6 | 172,5 (150+22,5) | 1,3 |
| 6 | 86,25 (75+11,25) | 2,3 |
| 7 | 172,5 (150+22,5) | 4,3 |
| 7 | 86,25 (75+11,25) | 2,3 |
| 8 | 172,5 (150+22,5) | 3,0 |
| 8 | 86,25 (75+11,25) | 2,3 |
| 9 | 172,5 (150+22,5) | 1,7 |
| 9 | 86,25 (75+11,25) | 1,7 |

## Patentansprüche

1. Fungizide Pflanzenschutzformulierung, enthaltend als Wirkstoffe:
- Dimethomorph als Wirkstoff A und
- wenigstens einen Wirkstoff B aus der Gruppe der Dithiocarbamate,
wobei die Pflanzenschutzformulierung als ein Ölsuspensionskonzentrat der Wirkstoffe A und B in einem flüssigen organischen Verdünnungsmittel C, welches unter Kohlenwasserstoffen, Pflanzenölen, Fettsäureestem und deren Gemischen ausgewählt ist, formuliert ist und wobei die Pflanzenschutzformulierung weiterhin wenigstens eine oberflächenaktive Substanz D enthält.

2. Pflanzenschutzformulierung nach Anspruch 1, worin das organische Verdünnungsmittel C ein Gemisch ist, umfassend
C.1 wenigstens ein erstes organisches Verdünnungsmittel C.1, das unter aliphatischen Kohlenwasserstoffen und aliphatischen Kohlenwasserstoff gemischen mit einer Viskosität von 10 bis 150 mPa.s, insbesondere 12 bis 120 mPa.s und speziell 12 bis 60 mPa.s bei 20°C, Pflanzenölen und Fettsäureestern ausgewählt ist, und
C.2 wenigstens ein zweites organisches Verdünnungsmittel C.2, das unter Kohlenwasserstoffen und deren Gemischen mit einer Viskosität von weniger als 10 mPa.s, insbesondere 1,5 bis 5 mPa.s bei 20°C ausgewählt ist.

3. Pflanzenschutzformulierung nach einem der vorhergehenden Ansprüche, enthaltend Dimethomorph in einer Menge von 1 bis 30 Gew.-%, bezogen auf das Gesamtgewicht der Formulierung.

4. Pflanzenschutzformulierung nach einem der vorhergehenden Ansprüche, enthaltend den Wirkstoff B in einer Menge von 10 bis 50 Gew.-%, bezogen auf das Gesamtgewicht der Formulierung.

5. Pflanzenschutzformulierung nach einem der vorhergehenden Ansprüche, enthaltend wenigstens eine anionische oberflächenaktive Substanz D.1.

6. Pflanzenschutzformulierung nach Anspruch 5, wobei die anionische oberflächenaktive Substanz wenigstens ein Ligninsulfonat umfasst.

7. Pflanzenschutzformulierung nach Anspruch 5 oder 6, umfassend zusätzlich eine nichtionische oberflächenaktive Substanz D.2.

8. Pflanzenschutzformulierung nach Anspruch 7, wobei die nichtionische oberflächenaktive Substanz wenigstens eine oberflächenaktive Substanz der Formeln I oder I'
Alk-O-(A-O)m-R (I)
TST-O-(A-O)m-R (I')
umfasst, wobei
Alk für einen linearen oder verzweigten Alkylrest mit 8 bis 24 C-Atomen oder linearen oder verzweigten Alkenylrest mit 8 bis 24 C-Atomen steht;
TST für einen Tristyrylphenylrest steht;
A in der Gruppe (A-O)ₘ gleich oder verschieden sein kann und für Ethandiyl, Propandiyl oder Butandiyl steht;
m für 2 bis 50 steht; und
R Wasserstoff oder C₁-C₁₀-Alkyl bedeutet.

9. Pflanzenschutzformulierung nach einem der vorhergehenden Ansprüche, enthaltend wenigstens einen Verdicker E.

10. Pflanzenschutzformulierung nach Anspruch 9, wobei der Verdicker aus der Gruppe natürlicher und synthetischer Silikate ausgewählt ist.

11. Pflanzenschutzformulierung nach einem der vorhergehenden Ansprüche, enthaltend wenigstens einen weiteren agrochemischen Wirkstoff ausgewählt unter fungiziden Wirkstoffen aus den Gruppen Strobilurine, Sulfonamide, Phthalimide und Chinonfungizide.

12. Verwendung einer Pflanzenschutzformulierung nach einem der vorhergehenden Ansprüche zur Bekämpfung von Schadpilzen auf Kulturpflanzen.

13. Verwendung nach Anspruch 12 zur Bekämpfung der Schadpilze in Obstkulturen, Gemüsekulturen und Wein.

## Claims

1. A fungicidal plant protection formulation comprising, as active substances,
- dimethomorph as active substance A and
- at least one active substance B from the group of the dithiocarbamates,
where the plant protection formulation is formulated as an oil suspension concentrate of the active substances A and B in a liquid organic diluent C which is selected among hydrocarbons, vegetable oils, fatty acid esters and their mixtures, and where the plant protection formulation furthermore comprises at least one surface-active substance D.

2. The plant protection formulation according to claim 1, wherein the organic diluent C is a mixture comprising:
C.1 at least one first organic diluent C.1 which is selected among aliphatic hydrocarbons and aliphatic hydrocarbon mixtures with a viscosity of from 10 to 150 mPa.s, in particular from 12 to 120 mPa.s and specifically from 12 to 60 mPa.s at 20°C, vegetable oils and fatty acid esters, and
C.2 at least one second organic diluent C.2 which is selected among hydrocarbons and hydrocarbon mixtures with a viscosity of less than 10 mPa.s, in particular from 1.5 to 5 mPa.s at 20°C.

3. The plant protection formulation according to any of the preceding claims, comprising dimethomorph in an amount of from 1 to 30% by weight, based on the total weight of the formulation.

4. The plant protection formulation according to any of the preceding claims, comprising the active substance B in an amount of from 10 to 50% by weight, based on the total weight of the formulation.

5. The plant protection formulation according to any of the preceding claims, comprising at least one anionic surface-active substance D.1.

6. The plant protection formulation according to claim 5, wherein the anionic surface-active substance comprises at least one lignosulfonate.

7. The plant protection formulation according to claim 5 or 6, additionally comprising a nonionic surface-active substance D.2.

8. The plant protection formulation according to claim 7, wherein the nonionic surface-active substance comprises at least one surface-active substance of the formula I or I'
Alk-O-(A-O)ₘ-R (I)
TST-O-(A-O)ₘ-R (I')
where
Alk is a linear or branched alkyl radical having 8 to 24 C atoms or a linear or branched alkenyl radical having 8 to 24 C atoms,
TST is a tristyrylphenyl radical;
A in group (A-O)ₘ can be identical or different and is ethanediyl, propanediyl or butanediyl;
m is 2 to 50; and
R is hydrogen or C₁-C₁₀-alkyl.

9. The plant protection formulation according to any of the preceding claims, comprising at least one thickener E.

10. The plant protection formulation according to claim 9, wherein the thickener is selected from the group of the natural and synthetic silicates.

11. The plant protection formulation according to any of the preceding claims, comprising at least one further agrochemical active substance selected among fungicidal active substances from the groups strobilurins, sulfonamides, phthalimides and quinone fungicides.

12. The use of the plant protection formulation according to any of the preceding claims for controlling harmful fungi on crop plants.

13. The use according to claim 12 for controlling the harmful fungi in fruit crops, vegetable crops and grapevines.

## Revendications

1. Formulation fongicide de protection des plantes, contenant en tant qu'agents actifs :
- du diméthomorphe en tant qu'agent actif A et
- au moins un agent actif B du groupe des dithiocarbamates,
la formulation de protection des plantes étant formulée sous la forme d'une suspension huileuse concentrée des agents actifs A et B dans un diluant organique liquide C, qui est choisi parmi les hydrocarbures, les huiles végétales, les esters d'acides gras et leurs mélanges, et la formulation de protection des plantes contenant également au moins une substance tensioactive D.

2. Formulation de protection des plantes selon la revendication 1, dans laquelle le diluant organique C est un mélange comprenant
C.1 au moins un premier diluant organique C.1, qui est choisi parmi les hydrocarbures aliphatiques et les mélanges d'hydrocarbures aliphatiques ayant une viscosité de 10 à 150 mPa·s, notamment de 12 à 120 mPa·s, et particulièrement de 12 à 60 mPa·s à 20 °C, les huiles végétales et les esters d'acides gras, et
C.2 au moins un second diluant organique C.2, qui est choisi parmi les hydrocarbures et leurs mélanges ayant une viscosité inférieure à 10 mPa·s, notamment de 1,5 à 5 mPa·s à 20 °C.

3. Formulation de protection des plantes selon l'une quelconque des revendications précédentes, contenant du diméthomorphe en une quantité de 1 à 30 % en poids, par rapport au poids total de la formulation.

4. Formulation de protection des plantes selon l'une quelconque des revendications précédentes, contenant l' agent actif B en une quantité de 10 à 50 % en poids, par rapport au poids total de la formulation.

5. Formulation de protection des plantes selon l'une quelconque des revendications précédentes, contenant au moins une substance tensioactive anionique D.1.

6. Formulation de protection des plantes selon la revendication 5, dans laquelle la substance tensioactive anionique comprend au moins un sulfonate de lignine.

7. Formulation de protection des plantes selon la revendication 5 ou 6, comprenant également une substance tensioactive non ionique D.2.

8. Formulation de protection des plantes selon la revendication 7, dans laquelle la substance tensioactive non ionique comprend au moins une substance tensioactive de formule I ou I'
Alk-O-(A-O)ₘ-R (I)
TST-O-(A-O)ₘ-R (I')
dans lesquelles
Alk représente un radical alkyle linéaire ou ramifié de 8 à 24 atomes C ou un radical alcényle linéaire ou ramifié de 8 à 24 atomes C ;
TST représente un radical tristyrylphényle ;
les A dans le groupe (A-O)ₘ peuvent être identiques ou différents et représentent éthanediyle, propanediyle ou butanediyle ;
m représente 2 à 50 ; et
R signifie hydrogène ou alkyle en C₁-C₁₀.

9. Formulation de protection des plantes selon l'une quelconque des revendications précédentes, contenant au moins un épaississant E.

10. Formulation de protection des plantes selon la revendication 9, dans laquelle l'épaississant est choisi dans le groupe des silicates naturels et synthétiques.

11. Formulation de protection des plantes selon l'une quelconque des revendications précédentes, contenant au moins un agent actif agrochimique supplémentaire choisi parmi les agents actifs fongicides des groupes des strobilurines, des sulfonamides, des phtalimides et des fongicides à base de quinone.

12. Utilisation d'une formulation de protection des plantes selon l'une quelconque des revendications précédentes pour lutter contre les champignons nuisibles sur les plantes cultivées.

13. Utilisation selon la revendication 12 pour lutter contre les champignons nuisibles dans les cultures de fruits, les cultures de légumes et les vignes.
